# EUROPEAN PATENT APPLICATION

(11) **EP 1 741 991 A1**
(43) Date of publication of application: **10.01.2007**
(21) Application number: 06116541.1
(22) Date of filing: 04.07.2006
(51) Int. Cl.: F24D 19/10, F16K 37/00, G05D 7/01

(54) **Return manifold unit for hot-water heating system and the like**

(30) Priority: 05.07.2005 IT TO20050465
(71) Applicant: Testing Center S.r.l., 13018 Valduggia VC (IT)
(72) Inventor: Lumello, Carlo, I-13018, VALDUGGIA (Vercelli) (IT)
(74) Representative: Fioravanti, Corrado

(57) **Abstract**

The manifold unit comprises a sleeve made of a plastic material (10) which forms an internal transverse duct (13) with an opening (15) for inputting water coming from at least one secondary circuit (12) into the sleeve (10). The sleeve 10 is associated with a valve device to regulate and display the instantaneous rate of flow in the secondary circuit. The valve device includes a shutter (16) which can be rotated manually around an internal portion (30, 31) housed in the transverse duct (13) to open or close the opening (15) and a transparent tubular portion (20) which protrudes externally from the sleeve (10) and forms an internal elongated cavity (21) in which a flow indicator (23) slides.

The shutter forms a stop tooth (37) suitable for cooperating alternately with two abutment surfaces (38, 39) formed by the sleeve (10). The surfaces (38, 39) are spaced angularly around the axis of rotation (Y) of the shutter (16) to block the rotation of the shutter in two respective angular total open and closed positions of the valve device.

## Description

This invention relates to a return manifold unit for hot-water heating systems and the like.

Manifolds made of plastic material, less expensive and lighter than traditional metal ones, and produced by moulding a single piece or by assembling banks of modular units with reduced lengths, have recently been spreading on the market.

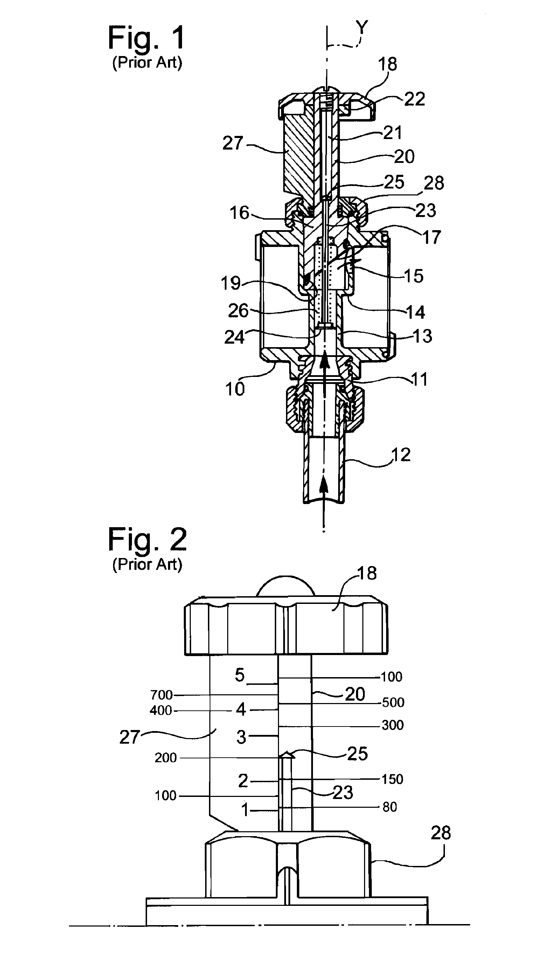

To better understand the state of the art and the problems inherent in it, a modular unit of a known type will be described first of all, making reference to figures 1 and 2 in the attached drawings.

The modular unit in figures 1 and 2 comprises a sleeve 10 of moulded plastic material which can be coupled to other similar sleeves to make up a water return manifold. Fixed in the sleeve 10 is a lower pipe coupling 11 connected to a pipe 12 of a secondary circuit; the water returns to the manifold through the pipe 12. Internally, the manifold 10 forms a transverse duct 13 which widens, defining a cup-shaped formation 14 with an outlet opening 15.

A valve device is associated with the sleeve 10 to regulate and display the instantaneous rate of flow in the associated secondary circuit. The valve device comprises a cylindrical rotatable shutter 16 with an oblique base 17 housed in the cup-shaped formation 14 and a knob 18. The shutter 16 is made of a transparent material and has a tubular portion 20 at the top with an axial central cavity 21 in which can slide an indicator rod 23 with a bottom disc 24 located in the transverse duct 13 and a head 25 at the top, visible from the outside through the tubular portion 20. When the valve is in an at least partially open position, the flow of water in the transverse duct 13 raises the indicator rod 23, opposed by the resilient force of a spring 26. The raising of the indicator rod 23 is proportional to the intensity of the passing flow. The head 25 at the top of the movable rod 23 positions itself along a graduated scale (figure 2) on a plate 27 and makes it possible to read the instantaneous rate of flow through the duct 13.

The various circuits in a system generally have different lengths. When designing a system, a pump is selected with such a lift as to guarantee a sufficient flow in the longest secondary circuit where the losses of pressure are greatest. To prevent the tendency for the water to be conveyed more into the secondary circuits where the pressure losses are lower, it is necessary to artificially introduce supplementary pressure losses in these circuits in such a way as to obtain overall pressure losses which are substantially equal for all the circuits. The supplementary pressure losses are obtained by choking the openings 15 by means of the respective rotatable shutters 16.

The manufacturer of the system provides the user with the data of the flow rates to be obtained in the various secondary circuits. It is therefore necessary to turn the various knobs 18 until the head 25 of the associated indicator rod 23, in each modular unit, is positioned at the predetermined level along the graduated scale on the reference plate 27.

The knob 18 forms two stop teeth 22 angularly spaced 180 degrees (one only of which is visible in figure 1) which strike alternately against the plate 27 in the two angularly opposite positions of complete closure and maximum opening. The plate 27 rests and is held on the body 10 by a ring 28.

If this ring is not screwed in tightly or is accidentally unscrewed, or if the knob is closed or opened too forcefully, the plate 27 varies its angular position around the transverse axis Y. As a consequence, the angularly opposite positions of the knob 18 no longer correspond to the completely open and closed positions of the shutter, and it therefore becomes very difficulty to obtain accurate adjustment of the rate of flow in the corresponding secondary circuit.

The main object of the present invention is to provide a return manifold which would allow precise adjustment of the flow rate in the various sections or secondary circuits of a hot-water heating system at all times.

Another object of the invention is to make adjustment easier for the user by providing clearly visible, precise and stable references.

These and other objects and advantages, which will be better understood below, are achieved according to the invention by a manifold unit having the features defined in the appended claims.

The structural and functional characteristics of a preferred embodiment of the invention will now be described, with reference to the appended drawings, in which:
- figure 1 is an axially sectioned view of a modular unit of a known type for a return manifold unit in a hot-water heating system;
- figure 2 is a front elevation, on an enlarged scale, of a detail of the modular unit in figure 1;
- figure 3 is an axially sectioned view of a modular unit for a manifold unit according to the invention;
- figure 4 is a perspective view, partially sectioned, of the modular unit in figure 3;
- figure 5 is an exploded perspective view of the modular unit in figures 3 and 4;
- figure 6 is a perspective view of a shutter of the modular unit in figures 3-5; and
- figure 7 is an plan view from above of a shutter of the modular unit in figures 3-6.

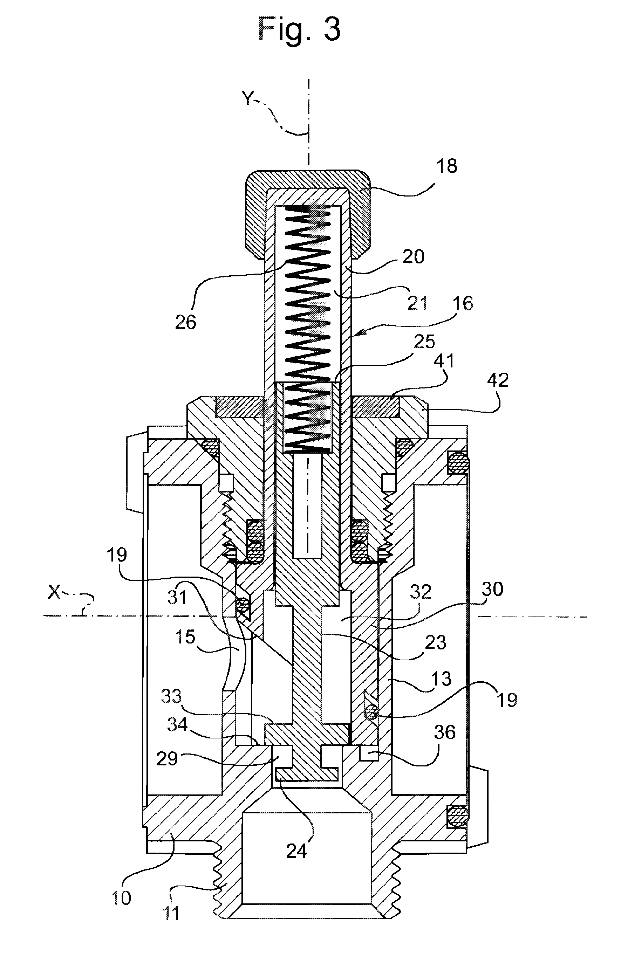

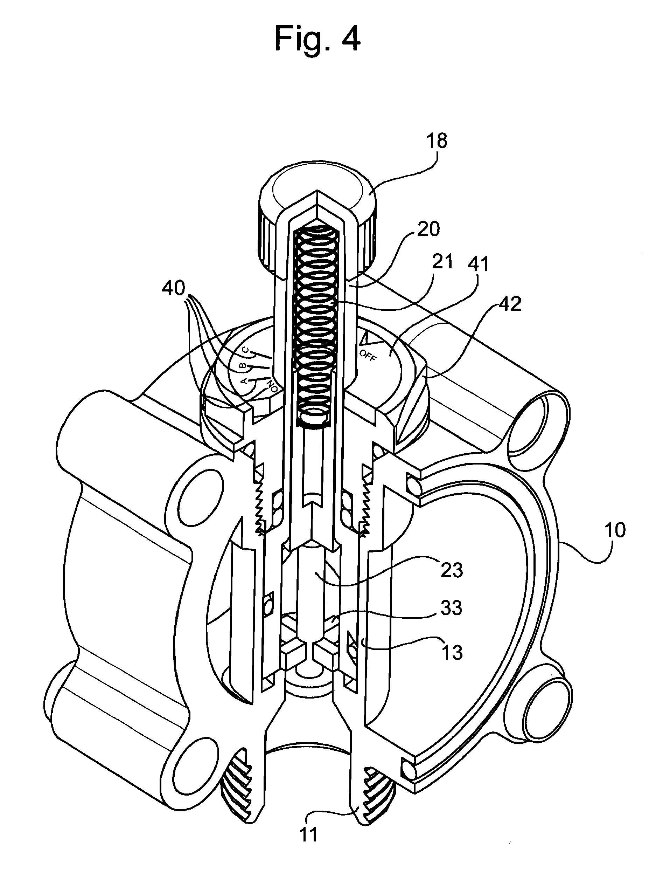

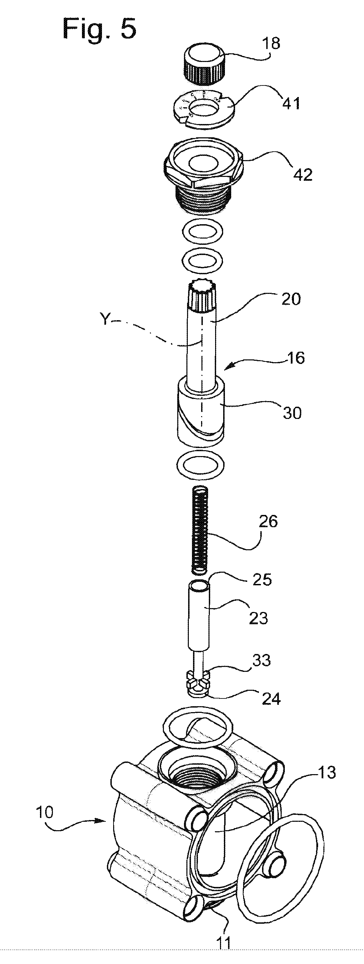

Referring now to figures 3-7 and, where possible, using the same reference numbers already used in figures 1 and 2 to define identical or corresponding parts, a modular unit according to the invention comprises a sleeve 10 of plastic material open at the two ends and connectable side by side to other similar manifolds to make up a water return manifold of a hot-water heating system. The sleeve 10 forms a lower pipe coupling 11 threaded externally for connection to a pipe (not illustrated) of a secondary circuit; the water returns to the manifold through this pipe. A valve device is associated with each sleeve 10 to regulate and display the instantaneous rate of flow in the associated secondary circuit.

It will be evident from the description which follows that the decision to realize a manifold unit obtained from the assembly of banks of modular units with sleeves of reduced length simply constitutes a preferential choice in some applicative situations but is certainly not imperative for the purposes of implementing the invention. In particular, this also lends itself to being realized with a manifold composed of a single elongated sleeve, provided with several valve devices side by side.

The sleeve 10 forms an internal transverse duct 13 with an outlet opening 15 and an inlet opening 29 communicating with the lower pipe coupling 11.
In the entire description and in the claims which follow, terms and expressions which indicate positions and orientations such as "longitudinal", "axial" and "transverse" refer to the central longitudinal axis X of the manifold 10.

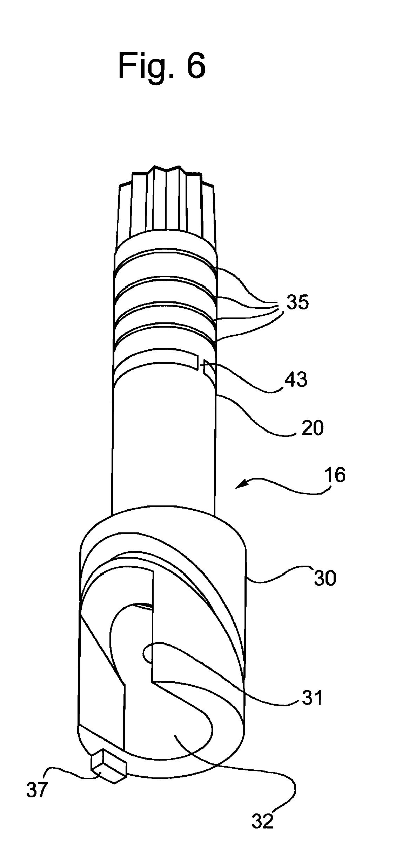

A rotatable cylindrical shutter 16 of transparent material is partially housed in the duct 13 and at the bottom forms a hollow tubular portion 30 with a window 31. At the top, the shutter 16, illustrated separately in figure 6, forms a tubular portion 20 which protrudes transversely out of the manifold. The transparent tubular portion 20 has an elongated cavity 21 which communicates at the bottom with a cavity 32 defined by the cylindrical portion 30. The shutter 16 can be rotated by means of an external knob 18 and is provided with an oblique O-ring seal acting against the internal cylindrical wall of the duct 13. The outlet 15 is opened, choked or closed by turning the shutter 16.

An indicator rod 23 with a bottom disc 24 located in the inlet opening 29, a set of radial fins 33 suitable for coming into contact with a bottom wall 34 of the sleeve, and a top head 25 visible from the outside through the tubular portion 20 of the transparent shutter 16 can move axially in the cavity 21. When the valve is in an at least partially open position, the flow of water from the coupling pipe 11 enters the transverse duct 13 and passes through the window 31 and the outlet 15, pushing the disc 24 and the indicator rod 23 upwards, in contrast with the resilient force of a spring 26 placed between the rod 23 and the shutter 16. The raising of the indicator rod 23 is proportional to the rate of flow. The head 25 of the rod 23 positions itself along a graduated scale 35 on the external tubular portion 20 of the shutter 16 and makes it possible to read the instantaneous rate of flow in the secondary associated circuit.

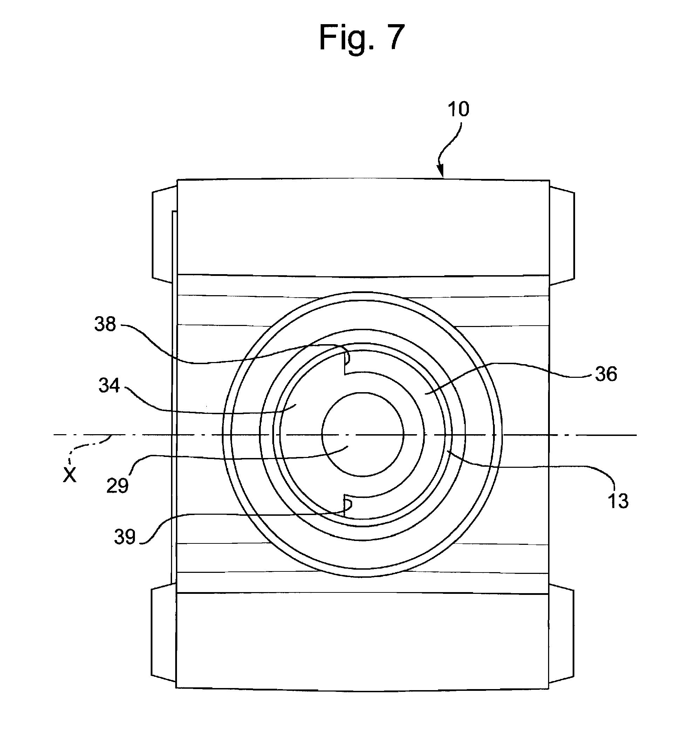

Obtained on the bottom wall 34 of the duct 13, near the inlet opening 29, is an arched groove 36 in which a stop tooth 37 (figure 6) which protrudes at the bottom from the cylindrical portion 30 of the shutter 16 engages. The two totally open and closed positions of the valve device are determined by the contact of the stop tooth 37 with one of a pair of abutment surfaces 38, 39 positioned at an angle of about 180° apart (figure 7). In the example illustrated, the surfaces 38, 39 are constituted by the two ends of the groove 36.

The abutment surfaces 38, 39 are fixed rigidly with respect to the body of the sleeve 10, and therefore constitute fixed reference surfaces for the rotatable shutter 16. This configuration guarantees that the opposite angular positions of the knob 18 always correspond to the respective completely open and closed positions of the shutter.

Also according to the invention, the precise adjustment of the rate of flow in the various secondary circuits is facilitated by the fact that the valve device comprises a series of clearly visible notches 40 (or other reference marks) obtained on an element blocked rigidly with respect to the body of the sleeve 10, in this example an external annular plate 41 blocked on a ring 42 screwed on the top part of the transverse duct 13. The totally open and closed angular positions (ON, OFF) and marks associated with degrees of partial opening (for example, A, B, C, D and E) are obtained on the annular plate 41.

To adjust the rate of flow in a secondary circuit to the prescribed value, the user turns the knob 18 in such a way as to align an index 43 (figure 6) of the shutter 16 with the prescribed notch 40 (for example A), and checks that the head 25 of the rod positions itself at the level of the corresponding notch of the graduated scale on the external tubular portion 20 of the shutter 16.

Even though a form of preferred embodiment of the invention has been described with reference to the attached figures, it is intended that this description was made for purely indicative and not limitative purposes, and that the invention is capable of numerous variants relating to the form, dimensions, arrangement of the parts, construction details and materials used. For example, the means which determine the angular abutment of the shutter with respect to the sleeve may assume different forms or be located in different positions from the stop tooth 37 and from the arced groove 36 described and illustrated here. In the same way, the reference marks 40 which indicate the degrees of opening and closing, and therefore the flow rate values, can be obtained on different parts of the annular plate 41.

## Claims

1. Manifold unit for hot-water heating systems and the like, comprising:
- a hollow sleeve body made of plastic material (10) defining a longitudinal axis (X), composing or constituting a return manifold in a hot-water heating system, and forming at least one internal transverse duct (13) with an opening (15) for inputting water coming from at least one secondary circuit (12) into the sleeve (10);
- at least one valve device, associated with the sleeve (10), to regulate and display the instantaneous rate of flow in the associated secondary circuit, wherein the valve device includes
- a shutter (16) which can be rotated manually around a transverse axis (Y) with an internal portion (30, 31) housed in the internal transverse duct (13) to open or close the opening (15) and a transparent tubular portion (20) which protrudes externally from the sleeve (10) and forms an internal elongated cavity (21), and
- a flow indicator (23), which can move transversally in the elongated cavity (21);
**characterized in that** the unit comprises
- a stop means (37) rotationally integral with the shutter (16), and
- two abutment surfaces (38, 39) fixed rigidly with respect to the body of the sleeve (10), where the surfaces (38, 39) are spaced angularly around the axis of rotation (Y) of the shutter (16) and suitable for cooperating alternately with the stop means (37) to block the rotation of the shutter in two respective angular totally open and closed positions of the valve device.

2. A manifold unit according to Claim 1, **characterized in that** the stop means (37) is a stop tooth formed by the shutter (16) and that the abutment surfaces (38, 39) are opposite terminal surfaces of an arced groove (36) formed in the sleeve (10).

3. A manifold unit according to Claim 1, **characterized by** further comprising reference marks (40) indicating angular positions and corresponding degrees of opening of the shutter (16) located in a fixed manner on a part (41) fixed rigidly with respect to the sleeve (10).

4. A manifold unit according to Claim 3, **characterized in that** the part (41) bearing the reference marks (40) is arranged around the external tubular portion (20) of the shutter (16).

5. A manifold unit according to Claim 3 or 4, **characterized in that** the part (41) bearing the reference marks (40) is an external annular plate fixed to the sleeve (10).

6. A manifold unit according to any one of Claims 3, 4 or 5, **characterized in that** the shutter (16) has an index (43) suitable for being aligned with one of the reference marks (40).

7. A manifold unit according to any one of Claims 3 to 6, **characterized in that** the reference marks (40) correspond to further reference marks (35) obtained on the external tubular portion (20) of the shutter (16) for the reading of the instantaneous rate of flow passing through the transverse duct (13).

8. A manifold unit according to any one of the preceding claims, **characterized in that** the hollow sleeve body (10) is a modular element with a reduced length with two axially opposite open ends connectable side by side with other similar modular sleeves (10) to make up a water return manifold.

9. A manifold unit according to Claim 8, **characterized in that** the modular sleeve (10) is associated with a single valve device to adjust and display the rate of flow in a single section or secondary circuit in a hot-water heating system.

10. A manifold unit according to any one of Claims 1 to 7, **characterized in that** the hollow sleeve body (10) is an axially elongated element provided with a plurality of valve devices for adjusting and displaying the rates of flow in a corresponding plurality of sections or secondary circuits in a hot-water heating system.
